# EUROPÄISCHE PATENTSCHRIFT

(11) **EP 2 165 879 B1**
(45) Veröffentlichungstag und Bekanntmachung des Hinweises auf die Patenterteilung: **12.01.2011**
(21) Anmeldenummer: 08016636.6
(22) Anmeldetag: 22.09.2008
(51) Int. Cl.: B60P 1/26, B60J 5/10

(54) **Verdeckaufbau**
Canopy construction
Structure d'abri

(43) Veröffentlichungstag der Anmeldung: 24.03.2010
(73) Patentinhaber: VBG GROUP TRUCK EQUIPMENT GmbH, 47807 Krefeld (DE)
(72) Erfinder: Wensing, Udo, 46145 Oberhausen (DE); Hahnen, Hans Boris, 47475 Kamp-Lintfort (DE); Neumeyer, Frank, 47877 Willich (DE); Frentzen, Frank, 41749 Viersen (DE); Birkenbach, Rolf, 47809 Krefeld (DE); Kemmerling, Karl, 42719 Solingen (DE); Scholz, Axel, 47447 Moers (DE); Lauterbach, Tim, 41066 Mönchengladbach (DE); Weigelt, Rolf, 47228 Duisburg (DE)
(74) Vertreter: DR. STARK & PARTNER

(56) Entgegenhaltungen:
- EP-A2- 1 136 292
- WO-A1-2008/030155
- AT-B- 383 088

## Beschreibung

Die Erfindung betrifft einen Verdeckaufbau für einen LKW oder LKW-Anhänger, mit wenigstens einem Endspriegel, der einen zwischen einer im Wesentlichen horizontal ausgerichteten Verriegelungsposition und einer schräg aufwärts weisenden Öffnungsposition verschwenkbar ausgebildeten Abschlussbalken sowie eine Aufstellautomatik mit einem Aufstellelement, bei der mittels eines gelenkig angeschlagenen Hubelements der ebenfalls gelenkig angeschlagene Abschlussbalken aus seiner flachen, horizontal ausgerichteten Position in seine schräg aufgerichtete Position verlagerbar ist, umfasst.

Aus der Praxis bzw. aus der EP 1136292 A2 sind derartige Verdeckaufbauten für LKWs oder LKW-Anhänger bekannt, bei denen der Abschlussbalken des Endspriegels den Endbereich des Dachs und ggf. auch den oberen Bereich der vorder- oder rückseitigen Stirnwand bildet. Dabei ist der Abschlussbalken mit einem bei seiner Verriegelungsposition horizontal ausgerichteten flächigen Teilelement versehen und weist darüber hinaus zumeist auch ein bei der Verriegelungsposition vertikal ausgerichtetes und oberhalb der stirnseitigen Türen, einer klappbaren Ladewand oder einer Stirnwand befindliches Abschlusselement auf.

Um die Ladeöffnung nach oben zu vergrößern und/oder insbesondere auch eine Beladung bis unmittelbar unter den Deckenbereich zu ermöglichen, kann der Abschlussbalken mittels der Aufstellautomatik in eine schräg aufwärts weisende Öffnungsposition verschwenkt werden. Je nach Dachtyp des LKWs oder LKW-Anhängers kann zudem ein Verschieben des Endspriegels einschließlich des daran angebrachten Abschlussbalkens erfolgen.

Bei bisher bekannten Verdeckaufbauten ist das Aufstellelement der Aufstellautomatik als ein Metallprofil mit in etwa U-förmigem Querschnitt ausgebildet, welches in der Herstellung relativ kostspielig ist.

Aufgabe der Erfindung ist es, die vorgenannten Nachteile zu vermeiden und eine kostengünstige Lösung zur Realisierung einer stabilen und dennoch kostengünstigen Aufstellautomatik anzugeben.

Diese Aufgabe wird dadurch gelöst, dass das Aufstellelement als ein Kunststoff-Formteil ausgebildet ist, welches unterseitig eine Aussparung für die vorzugsweise vollständige Aufnahme des insbesondere als Gasdruckfeder ausgebildeten Hubelements bei horizontal ausgerichteter Position des Aufstellelements aufweist. Dabei kann das Kunststoff-Formteil eine über die Länge und/oder die Breite einheitliche Stärke haben und entweder massiv oder aber mit einer Vielzahl an Verstrebungen ausgebildet sein.

Vorzugsweise kann der Endspriegel zumindest zwei in einem Abstand voneinander parallel ausgerichtete Spriegel umfassen, die endseitig mittels eines im Wesentlichen plattenförmigen Verbindungselements miteinander verbunden sind, so dass eine gute Steifigkeit bei geringen Verwindungen und einem geringen Materialaufwand resultieren.

Erfindungsgemäß kann der Endspriegel verschieblich ausgebildet sein und das Verbindungselement mit einem seitlich über die Spriegel hinausragenden Teilbereich den Rollenschlitten der Spriegel bilden, so dass eine Befestigung der Rollenschlitten nicht erforderlich ist und der Bauteileaufwand reduziert wird.

Bei einem bevorzugten Ausführungsbeispiel der Erfindung kann sich das Verbindungselement quer zur Längserstreckung der Spriegel über zumindest einen Spriegel hinaus erstrecken, und es kann der sich quer zur Längserstreckung der Spriegel über zumindest einen Spriegel hinaus erstreckende Teilbereich des Verbindungselements einwärts weisend abgeschrägt ausgebildet sein, so dass eine verbesserte Abstützung sowohl an den Spriegeln gegeben ist als auch eine größere Länge der "integrierten Rollenwagen", wodurch eine bessere Abstützung des Endstriegels resultiert.

Erfindungsgemäß kann das Verbindungselement als eine insbesondere metallene Platte mit einem durch mehrfache Abkantungen als oberseitig offener Kanal abgesenkt ausgebildeten und quer zur Längserstreckung der Spriegel ausgerichteten Teilbereich ausgebildet sein, so dass eine gute Stabilität bei geringer Materialstärke möglich ist und damit eine montagefreundliche Befestigung an den Spriegeln von oben oder unten ohne wesentliche Veränderung der Bauteilhöhe durch ein starkes "Auftragen" des Verbindungselementes erfolgen kann.

Bei einem bevorzugten Ausführungsbeispiel kann das Hubelement in dem sich über zumindest einen Spriegel hinaus erstreckenden Teilbereich des Verbindungselements, insbesondere in dem entsprechenden Bereich des oberseitig offenen Kanals, gelenkig angeschlagen sein, und es kann das Aufstellelement in dem sich über zumindest einen Spriegel hinaus erstreckenden Teilbereich des Verbindungselements, insbesondere in dem entsprechenden Bereich des oberseitig offenen Kanals, gelenkig angeschlagen sein, so dass eine verdeckte und insoweit in etwa innerhalb der Materialhöhe der Spriegel erfolgende Anbringung des Aufstellelementes gegeben ist und somit die nutzbare Ladehöhe nicht beeinträchtigt wird.

Erfindungsgemäß kann der Verdeckaufbau ein Verdeckgestell für einen Planenaufbau mit einer Mehrzahl von entlang seitlich parallel ausgerichteter Längsträger verlagerbarer Spriegel sowie eine daran angebrachte faltbare Verdeckplane umfassen, wobei die Spriegel an ihren beiden Seiten jeweils einen Rollenschlitten aufweisen, oder der Verdeckaufbau kann ein Verdeckgestell für einen Festplattenaufbau mit einer Mehrzahl von entlang seitlich parallel ausgerichteter Längsträger verlagerbarer Festplattensegmente umfassen, wobei die Festplattensegmente an ihren beiden Seiten jeweils Rollenschlitten aufweisen.

Im Folgenden wird ein in der Zeichnung dargestelltes Ausführungsbeispiel der Erfindung erläutert. Es zeigen:
- Fig. 1: eine Teilansicht als perspektivische Drauf- sicht eines erfindungsgemäßen Verdeckaufbaus,
- Fig. 2: den Gegenstand nach Fig. 1 als perspektivische Ansicht von schräg unten,
- Fig. 3: eine Vorderansicht des Gegenstandes nach Fig. 1 und
- Fig. 4: eine Seitenansicht des Gegenstandes nach Fig. 1.

In allen Figuren werden für gleiche bzw. gleichartige Bauteile übereinstimmende Bezugszeichen verwendet.

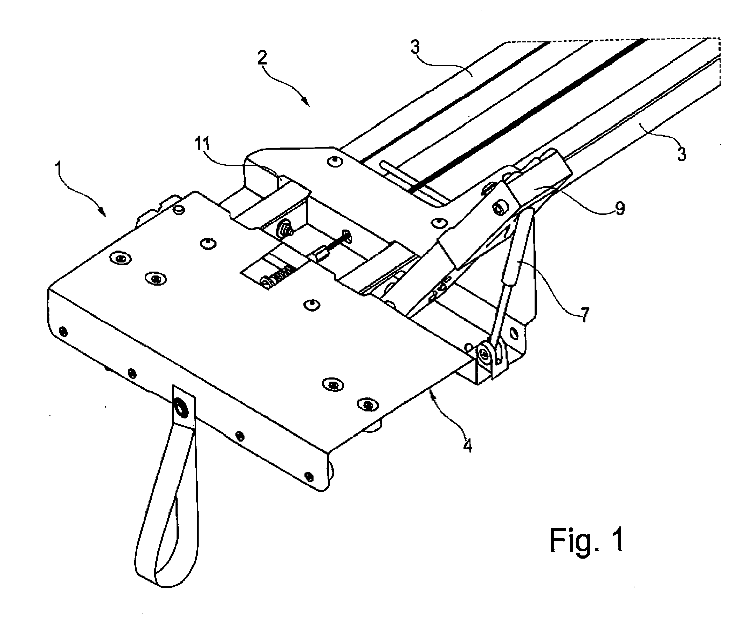

Fig. 1 zeigt eine Teilansicht eines Verdeckaufbaus 1 für einen in der Zeichnung nicht dargestellten LKW oder LKW-Anhänger, mit einem Endspriegel 2, der zwei in einem Abstand voneinander parallel ausgerichtete Spriegel 3 umfasst, die endseitig mittels eines im Wesentlichen plattenförmigen und als mit Abwinklungen versehene Metallplatte ausgebildeten Verbindungselements 4 miteinander verbunden sind.

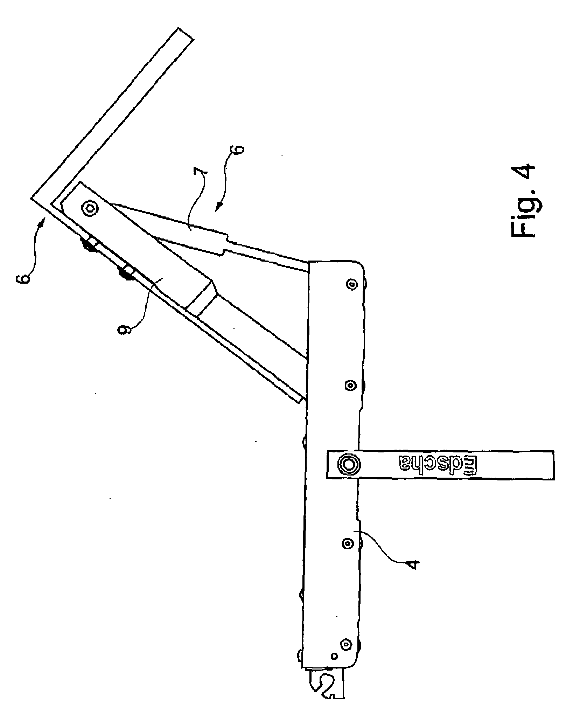

Der Endspriegel 2 ist mit einer Aufstellautomatik 5 versehen, an deren als Kunststoff-Formteil ausgebildeten Aufstellelement 9, wie in Fig. 4 beispielhaft dargestellt, ein Abschlussbalken 6 angebracht ist, welcher mittels der Aufstellautomatik 5 zwischen einer im Wesentlichen horizontal ausgerichteten Verriegelungsposition und einer schräg aufwärts weisenden Öffnungsposition verschwenkbar ausgebildet ist. Sämtliche Figuren einschließlich Fig. 4 zeigen die Aufstellautomatik 5 in ihrer schräg aufwärts weisenden Öffnungsposition.

Die Aufstellautomatik 5 umfasst ein gelenkig an dem Verbindungselement 4 sowie dem Aufstellelement 9 angeschlagenes Hubelement 7, und der Abschlussbalken 6 ist ebenfalls, im dargestellten Fall nicht direkt, sondern durch das Aufstellelement 9 der Aufstellautomatik 5, gelenkig an dem Verbindungselement 4 angeschlagen.

Das als Kunststoff-Formteil ausgebildete Aufstellelement 9 weist unterseitig eine Aussparung 8 für die vollständige Aufnahme des im dargestellten Ausführungsbeispiel als Gasdruckfeder ausgebildeten Hubelements 7 bei horizontal ausgerichteter Position des Aufstellelements 9 auf.

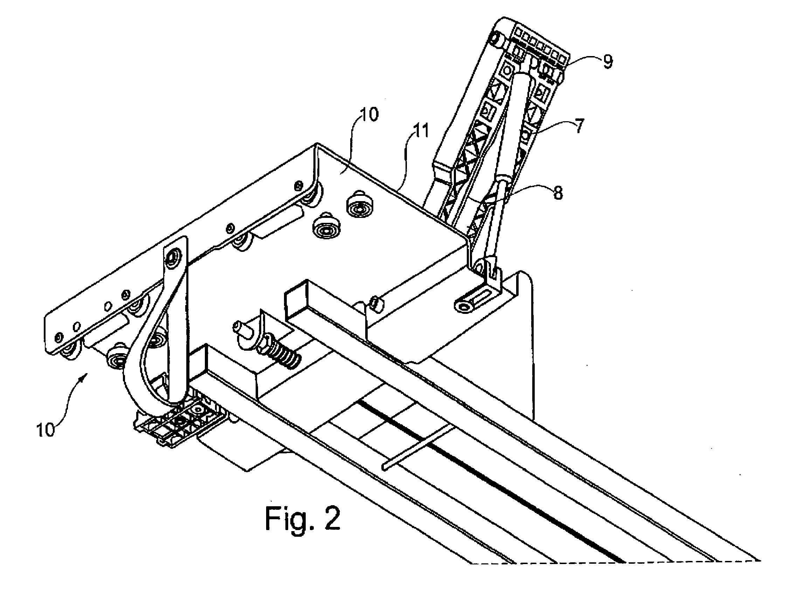

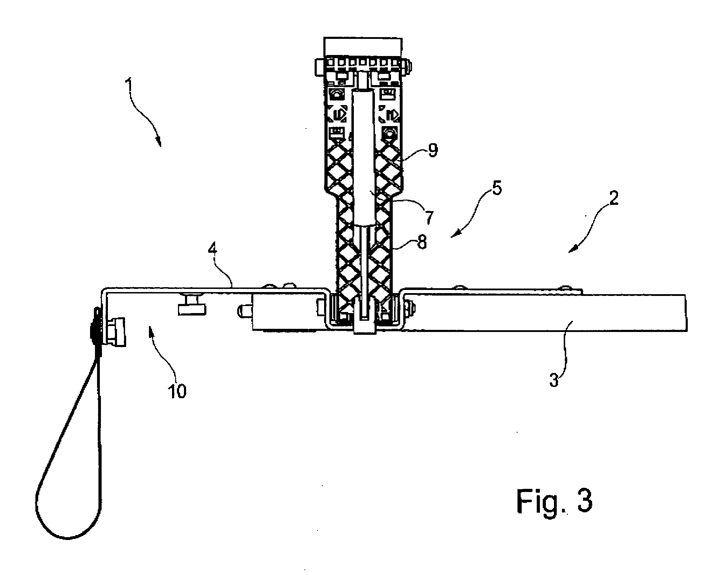

Wie aus Fig. 2 ersichtlich erstreckt sich das Verbindungselement 4 seitlich über die Spriegel 3 mit einem Teilbereich hinaus, welcher den Rollenschlitten 10 des Endspriegels 2 bildet. Weiterhin erstreckt sich das Verbindungselement 4 auch quer zur Längserstreckung der Spriegel 3 in beiden Richtungen über den jeweiligen Spriegel 3 hinaus. Die durch die mäanderförmigen Abwinklungen des Verbindungselementes 4 (vgl. Fig. 3) gebildeten, oberseitig bzw. unterseitig offenen Kanäle dienen einerseits der Aufnahme und Bildung der Rollenschlitten 10 (vgl. Fig. 2) bzw. andererseits der Aufnahme der Aufstellautomatik 5 und auch der stabilisierenden Durchführung der Spriegel 3 durch entsprechende Ausnehmungen 11 (vgl. Fig. 1).

In Fig. 3 ist sowohl der Aufbau des Aufstellelementes 9 mit seinen unterseitigen Verstrebungen und der Aussparung 8 deutlich erkennbar und auch die Befestigung des Verbindungselementes 4 an den Spriegeln 3 ist hieraus ersichtlich.

## Patentansprüche

1. Verdeckaufbau (1) für einen LKW oder LKW-Anhänger, mit wenigstens einem Endspriegel (2), der einen zwischen einer im Wesentlichen horizontal ausgerichteten Verriegelungsposition und einer schräg aufwärts weisenden Öffnungsposition verschwenkbar ausgebildeten Abschlussbalken (6) sowie eine Aufstellautomatik (5) mit einem Aufstellelement (9), bei der mittels eines gelenkig angeschlagenen Hubelements (7) der ebenfalls gelenkig angeschlagene Abschlussbalken (6) aus seiner flachen, horizontal ausgerichteten Position in seine schräg aufgerichtete Position verlagerbar ist, umfasst, **dadurch gekennzeichnet, dass** das Aufstellelement (9) als ein Kunststoff-Formteil ausgebildet ist, welches unterseitig eine Aussparung (8) für die vorzugsweise vollständige Aufnahme des insbesondere als Gasdruckfeder ausgebildeten Hubelements (7) bei horizontal ausgerichteter Position des Aufstellelements (9) aufweist.

2. Verdeckaufbau (1) nach dem vorhergehenden Anspruch, **dadurch gekennzeichnet, dass** der Endspriegel (2) zumindest zwei in einem Abstand voneinander parallel ausgerichtete Spriegel (3) umfasst, die endseitig mittels eines im Wesentlichen plattenförmigen Verbindungselements (4) miteinander verbunden sind.

3. Verdeckaufbau (1) nach dem vorhergehenden Anspruch, **dadurch gekennzeichnet, dass** der Endspriegel (2) verschieblich ausgebildet ist und das Verbindungselement (4) mit einem seitlich über die Spriegel (3) hinausragenden Teilbereich den Rollenschlitten (10) der Spriegel (3) bildet.

4. Verdeckaufbau (1) nach Anspruch 2 oder 3, **dadurch gekennzeichnet, dass** das Verbindungselement (4) sich quer zur Längserstreckung der Spriegel (3) über zumindest einen Spriegel (3) hinaus erstreckt.

5. Verdeckaufbau (1) nach dem vorhergehenden Anspruch, **dadurch gekennzeichnet, dass** der sich quer zur Längserstreckung der Spriegel (3) über zumindest einen Spriegel (3) hinaus erstreckende Teilbereich des Verbindungselements (4) einwärts weisend abgeschrägt ausgebildet ist.

6. Verdeckaufbau (1) nach einem der Ansprüche 2 bis 5, **dadurch gekennzeichnet, dass** das Verbindungselement (4) als eine insbesondere metallene Platte mit einem durch mehrfache Abkantungen als oberseitig offener Kanal abgesenkt ausgebildeten und quer zur Längserstreckung der Spriegel (3) ausgerichteten Teilbereich ausgebildet ist.

7. Verdeckaufbau (1) nach einem der Ansprüche 4 bis 6, **dadurch gekennzeichnet, dass** das Hubelement (7) in dem sich über zumindest einen Spriegel (3) hinaus erstreckenden Teilbereich des Verbindungselements (4), insbesondere in dem entsprechenden Bereich des oberseitig offenen Kanals, gelenkig angeschlagen ist.

8. Verdeckaufbau (1) nach einem der Ansprüche 4 bis 7, **dadurch gekennzeichnet, dass** das Aufstellelement (9) in dem sich über zumindest einen Spriegel (3) hinaus erstreckenden Teilbereich des Verbindungselements (4), insbesondere in dem entsprechenden Bereich des oberseitig offenen Kanals, gelenkig angeschlagen ist.

9. Verdeckaufbau (1) nach einem der vorhergehenden Ansprüche, **dadurch gekennzeichnet, dass** der Verdeckaufbau (1) ein Verdeckgestell für einen Planenaufbau mit einer Mehrzahl von entlang seitlich parallel ausgerichteter Längsträger verlagerbarer Spriegel (3) sowie eine daran angebrachte faltbare Verdeckplane umfasst, wobei die Spriegel (3) an ihren beiden Seiten jeweils einen Rollenschlitten (10) aufweisen.

10. Verdeckaufbau (1) nach einem der vorhergehenden Ansprüche, **dadurch gekennzeichnet, dass** der Verdeckaufbau (1) ein Verdeckgestell für einen Festplattenaufbau mit einer Mehrzahl von entlang seitlich parallel ausgerichteter Längsträger verlagerbarer Festplattensegmente umfasst, wobei die Festplattensegmente an ihren beiden Seiten jeweils Rollenschlitten (10) aufweisen.

## Claims

1. Canopy construction (1) for a commercial vehicle or commercial vehicle trailer, said canopy construction having at least one end bow member (2), which includes a closure cross member (6) realized so as to be pivotable between a substantially horizontally aligned locked position and an inclined upwardly-facing open position as well as an automatic adjustment mechanism (5) with an adjusting element (9), by way of which, by means of a flexibly attached lifting element (7), the equally flexibly attached closure cross member (6) is displaceable out of its flat, horizontally aligned position into its inclinedly aligned position, **characterized in that** the adjusting element (9) is realized as a plastics material moulded part, which on the underside has a recess (8) for, in the horizontally aligned position of the adjusting element (9), the preferably total accommodation of the lifting element (7), which, in particular, is in the form of a gas pressure spring.

2. Canopy construction (1) according to the preceding Claim, **characterized in that** the end bow member (2) includes at least two bow members (3), which are aligned in parallel at a spacing from each other and are interconnected at the end by means of a substantially plate-shaped connecting element (4).

3. Canopy construction (1) according to the preceding Claim, **characterized in that** the end bow member (2) is realized so as to be displaceable and the connecting element (4) forms the roller carriage (10) of the bow members (3) by way of a part region that projects laterally beyond the bow members (3).

4. Canopy construction (1) according to Claim 2 or 3, **characterized in that** the connecting element (4) extends transversely relative to the longitudinal extension of the bow members (3) beyond at least one bow member (3).

5. Canopy construction (1) according to the preceding Claim, **characterized in that** the part region of the connecting element (4), which extends transversely relative to the longitudinal extension of the bow members (3) beyond at least one bow member (3), is realized inclinedly facing inward.

6. Canopy construction (1) according to one of Claims 2 to 5, **characterized in that** the connecting element (4) is realized as a plate, in particular a metal plate, with a part region, which is realized in a sunken manner by multiple angular portions as a channel that is open at the top and is aligned transversely relative to the longitudinal extension of the bow members (3).

7. Canopy construction (1) according to one of Claims 4 to 6, **characterized in that** the lifting element (7) is flexibly attached in the part region of the connecting element (4|) extending beyond at least one bow member (3), in particular in the corresponding region of the channel that is open at the top.

8. Canopy construction (1) according to one of Claims 4 to 7, **characterized in that** the adjusting element (9) is flexibly attached in the part region of the connecting element (4) extending beyond the at least one bow member (3), in particular in the corresponding region of the channel that is open at the top.

9. Canopy construction (1) according to one of the preceding Claims, **characterized in that** the canopy construction (1) includes a canopy framework for installing a tarpaulin with a plurality of bow members (3) that are displaceable along longitudinal beams aligned laterally in parallel and a foldable canopy tarpaulin attached thereto, wherein the bow members (3) have a roller carriage (10) on each of their two sides.

10. Canopy construction (1) according to one of the preceding Claims, **characterized in that** the canopy construction (1) includes a canopy framework for installing a fixed plate with a plurality of fixed plate segments that are displaceable along longitudinal beams aligned laterally in parallel, wherein the fixed plate segments have roller carriages (10) on each of their two sides.

## Revendications

1. Structure de bâchage (1) destinée à un véhicule utilitaire ou à une remorque de véhicule utilitaire, comportant au moins un arceau d'extrémité (2) qui comprend une poutrelle d'occultation (6) réalisée avec faculté de pivotement entre une position de verrouillage, orientée pour l'essentiel horizontalement, et une position d'ouverture pointant à l'oblique vers le haut, ainsi qu'un mécanisme automatique de rehausse (5) équipé d'un élément rehausseur (9) et dans lequel, au moyen d'un élément de levage (7) rattaché de manière articulée, ladite poutrelle d'occultation (6), semblablement rattachée de manière articulée, peut être déplacée vers sa position dressée à l'oblique à partir de sa position plane orientée horizontalement, **caractérisée par le fait que** l'élément releveur (9) est réalisé sous la forme d'une pièce venue de moulage en matière plastique pourvue, à la face inférieure, d'un évidement (8) conçu pour recevoir de préférence intégralement, lorsque ledit élément rehausseur (9) est en position orientée horizontalement, l'élément de levage (7) se présentant notamment comme un ressort à pression gazeuse.

2. Structure de bâchage (1) selon la revendication précédente, **caractérisée par le fait que** l'arceau d'extrémité (2) est composé d'au moins deux armatures (3) orientées parallèlement à distance l'une de l'autre et reliées l'une à l'autre, aux extrémités, au moyen d'un élément de liaison (4) revêtant, pour l'essentiel, la forme d'une platine.

3. Structure de bâchage (1) selon la revendication précédente, **caractérisée par le fait que** l'arceau d'extrémité (2) est de réalisation coulissante, l'élément de liaison (4) formant, par une région partielle qui fait saillie latéralement au-delà des armatures (3), le chariot à galets (10) équipant lesdites armatures (3).

4. Structure de bâchage (1) selon la revendication 2 ou 3, **caractérisée par le fait que** l'élément de liaison (4) s'étend transversalement par rapport à l'étendue longitudinale des armatures (3), au-delà d'au moins une armature (3).

5. Structure de bâchage (1) selon la revendication précédente, **caractérisée par le fait que** la région partielle de l'élément de liaison (4) s'étendant transversalement par rapport à l'étendue longitudinale des armatures (3), au-delà d'au moins une armature (3), est de réalisation biseautée pointant vers l'intérieur.

6. Structure de bâchage (1) selon l'une des revendications 2 à 5, **caractérisée par le fait que** l'élément de liaison (4) est réalisé sous la forme d'une platine notamment métallique, dotée d'une région partielle qui, orientée transversalement par rapport à l'étendue longitudinale des armatures (3), est de réalisation encaissée revêtant la forme d'un canal ouvert à la face supérieure et résultant de coudes multiples.

7. Structure de bâchage (1) selon l'une des revendications 4 à 6, **caractérisée par le fait que** l'élément de levage (7) est rattaché, de manière articulée, dans la région partielle de l'élément de liaison (4) qui fait saillie au-delà d'au moins une armature (3), en particulier dans la région correspondante du canal ouvert à la face supérieure.

8. Structure de bâchage (1) selon l'une des revendications 4 à 7, **caractérisée par le fait que** l'élément rehausseur (9) est rattaché, de manière articulée, dans la région partielle de l'élément de liaison (4) qui fait saillie au-delà d'au moins une armature (3), en particulier dans la région correspondante du canal ouvert à la face supérieure.

9. Structure de bâchage (1) selon l'une des revendications précédentes, **caractérisée par le fait que** ladite structure de bâchage (1) comporte un châssis de bâchage dédié à un ensemble de bâchage comprenant une pluralité d'armatures (3), mobiles le long de supports longitudinaux orientés parallèlement dans le sens latéral, ainsi qu'une bâche repliable de recouvrement mise en place sur ledit châssis, lesdites armatures (3) étant respectivement munies d'un chariot à galets (10) sur leurs deux côtés.

10. Structure de bâchage (1) selon l'une des revendications précédentes, **caractérisée par le fait que** ladite structure de bâchage (1) comporte un châssis de bâchage dédié à un ensemble de panneaux fixes, comprenant une pluralité de segments de panneaux fixes mobiles le long de supports longitudinaux orientés parallèlement dans le sens latéral, lesdits segments de panneaux fixes étant respectivement pourvus d'un chariot à galets (10) sur leurs deux côtés.
